# EUROPEAN PATENT APPLICATION

(11) **EP 4 574 545 A1**
(43) Date of publication of application: **25.06.2025**
(21) Application number: 24221777.6
(22) Date of filing: 19.12.2024
(51) Int. Cl.: B60L 53/16

(54) **ROAD VEHICLE WITH ELECTRIC OR HYBRID PROPULSION**

(30) Priority: 22.12.2023 IT 202300027837
(71) Applicant: FERRARI S.p.A., 41100 Modena (IT)
(72) Inventor: SIANI, Aniello, 41100 MODENA (IT); SITTA, Ugo, 41100 MODENA (IT)
(74) Representative: Studio Torta S.p.A.

(57) **Abstract**

A road vehicle (1) comprising: a vehicle body (2) provided with ground resting wheels (10, 11); an electric or hybrid powertrain (3), which is adapted to drive into rotation at least one of said ground resting wheels resting (10, 11); an electric-energy accumulator (5), which is capable of storing, on the inside, a given amount of electric energy to be supplied to said powertrain (3); a charging unit (8), which is adapted to charge said electric-energy accumulator (5), when the road vehicle (1) is connected to an outer electric-energy source; and an electric connection interface (9), which allows the charging unit (8) to be connected to said outer electric-energy source and comprises: an upper frame or panel (15), which is located on or in the vehicle body (2) and delimits a through opening (16); and a socket-holding body (17), which is located under said upper frame or panel (15), supports a plurality of recharge electric sockets (18) and is capable of moving under said upper frame or panel (15) so as to be able to place any one of said recharge electric sockets (18) in front of the through opening (16) of the upper frame or panel (15), so that said recharge electric socket (18) is accessible from the outside through said through opening (16).

## Description

### CROSS-REFERENCE TO RELATED APPLICATIONS

This patent application claims priority from Italian patent application no. 102023000027837 filed on December 22, 2023, the entire disclosure of which is incorporated herein by reference.

### TECHNICAL FIELD

The invention relates to an electric- or hybrid-propulsion road vehicle.

More in detail, the invention preferably relates to a high-performance electric- or hybrid- propulsion car, to which the following disclosure will make explicit reference without thereby lacking generality.

### STATE OF THE ART

As is known, most electric- or hybrid- propulsion cars currently on the market comprise: a powertrain, which is provided with at least one alternating-current electric motor capable of driving into rotation the drive wheels of the vehicle and, in case of a hybrid car, also with an internal combustion engine capable of driving into rotation the drive wheels of the vehicle in addition or alternatively to the electric motor; a rechargeable battery pack, which is capable of storing, inside itself, a given quantity of electric energy to be supplied to the electric motor or motors of the powertrain; and an electronically-controlled, electric power-supply unit, which is interposed between the battery pack and the electric motor and is adapted to transform, based on the commands given by the driver of the vehicle, the direct-current electric energy coming from the battery pack into alternating-current electric energy suitable for the electric motor or motors of the powertrain.

In addition, plug-in hybrid- or electric- propulsion cars also comprise: an electronically-controlled battery-charging unit, which is adapted to charge the battery pack when the vehicle is connected to an outer electric-energy source, which can be either a charging station for motor vehicles or the traditional domestic power grid; and a recharge electric socket, which is located on the body of the vehicle so as to be accessible from the outside and allows the battery-charging unit to be directly connected to the outer electric-energy source.

More in detail, the vehicle battery-charging unit interposes itself between the battery pack and the outer electric-energy source and is adapted to control the flow of electric energy from the outer electric-energy source to the battery pack, so as to charge the battery pack in the possible shortest amount of time, without compromising the structural integrity thereof.

The recharge electric socket, on the other hand, is usually placed on a support panel, which is located inside a small service compartment that, in turn, is accessible from the outside by opening a small protection door.

Currently, the most widely available charging stations for motor vehicles in urban areas are of two types: AC charging stations (namely using alternating current) and DC charging stations (namely using direct current).

AC charging stations are capable of supplying the vehicle with electric energy in single-phase or three-phase alternating current, usually with a nominal voltage of 110 Volts (single-phase), 220-240 Volts (single-phase) or 380-400 Volts (three-phase) depending on the country.

The most popular DC charging stations, on the other hand, are capable of supplying the vehicle with direct-current electric energy with a nominal voltage that reaches about 400-500 Volts.

Clearly, the connection cables and the electric connectors needed to connect plug-in hybrid- or electric-propulsion cars to DC charging stations are structurally different from those needed to connect the same cars to AC charging stations.

In addition, the connection cables and electrical connectors allowing plug-in hybrid- or electric- propulsion cars to be connected to AC charging stations change if the charging station is a single-phase or three-phase charging station.

Clearly, the various types of electric connectors need, in the vehicle, dedicated recharge electric sockets that are incompatible with one another.

In order to make easier the charging of the battery pack, some manufacturers of plug-in hybrid- or electric-propulsion cars have chosen to equip their vehicles with two different recharge electric sockets, obviously suitable for operating with different types of charging stations.

Clearly, this choice is only feasible when the body of the vehicle allows manufacturers to create a large service compartment capable of accommodating two different recharge electric sockets or two small service compartments, each capable of accommodating a single recharge electric socket.

Unfortunately, in high-performance cars, the shape of the vehicle body is determined by aerodynamic needs and/or incorporates many aerodynamic active surfaces, so the space available is minimal and generally sufficient for one single recharge electric socket, with all the limitations that this entails.

### SUMMARY OF THE INVENTION

Aim of the present invention is to make the installation of several recharge electric sockets possible in cars whose body has very little space available for placing said electric sockets.

In accordance with these aims, according to the present invention there is provided an electric- or hybrid- propulsion road vehicle as defined in claim 1 and preferably, though not necessarily, in any one of the claims depending on it.

### BRIEF DESCRIPTION OF THE DRAWINGS

The present invention will now be described with reference to the accompanying drawings, which show a nonlimiting embodiment thereof, wherein:
- Figure 1 is a schematic perspective view of an electric- or hybrid- propulsion car realized according to the teachings of the present invention, with transparent parts and parts removed for clarity's sake;
- Figure 2 is a perspective view of the rear part of the car shown in figure 1, with transparent parts and parts removed for clarity's sake;
- Figures 3 and 4 are perspective views of the electric interface of the car shown in figures 1 and 2, with parts in section and parts removed for clarity's sake; whereas
- Figure 5 is a perspective view of a variant of the electric interface shown in Figures 3 and 4, with parts in section and parts removed for clarity's sake.

### DETAILED DESCRIPTION OF THE EMBODIMENTS

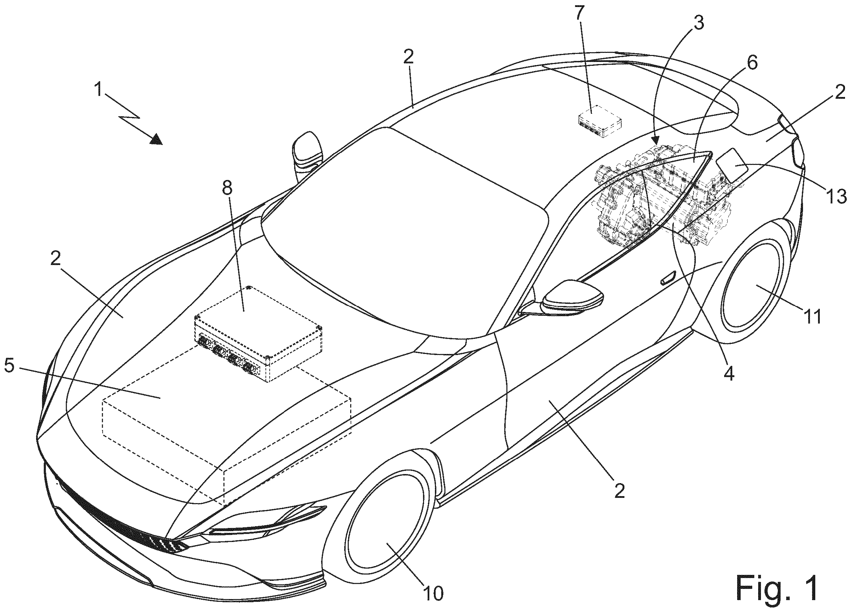

With reference to figure 1, number 1 denotes, as a whole, an electric- or hybrid- propulsion road vehicle, which is provided with ground resting wheels and can be advantageously used for transporting things and/or people.

More in detail, the road vehicle 1 is provided with a rigid vehicle body 2, preferably with a self-supporting structure, which lays on the ground by means of a plurality of ground resting wheels advantageously tyred, and is provided with a passenger compartment which is structured and dimensioned to accommodate the driver of the vehicle (that is the person driving the road vehicle) and preferably also at least one passenger advantageously sitting beside the driver.

In addition, the road vehicle 1 further comprises: a powertrain 3, which is located on the vehicle body 2 and includes at least one electric motor 4 adapted to drive into rotation of at least one or, more conveniently, at least one pair of said ground resting wheels; an electric-energy accumulator 5 of rechargeable type, which is located on the vehicle body 2 and is capable of storing, inside itself inside, a given quantity of electric energy to be supplied to the powertrain 3, or rather to the electric motor 4; and an electric power-supply unit 6, which is placed on the vehicle body 2, is interposed between the electric-energy accumulator 5 and the powertrain 3 and is adapted to control/adjust the flow of electric energy towards the powertrain 3, or rather towards the electric motor 4 of the powertrain 3, as a function of the commands given by the driver of the vehicle.

More in detail, the road vehicle 1 is preferably provided with a motor control unit 7, which is located on the vehicle body 2, receives and processes the commands given by the driver of the vehicle, for example through the accelerator pedal (not visible in the figures), and is adapted to control the electric power-supply unit 6 according to these commands.

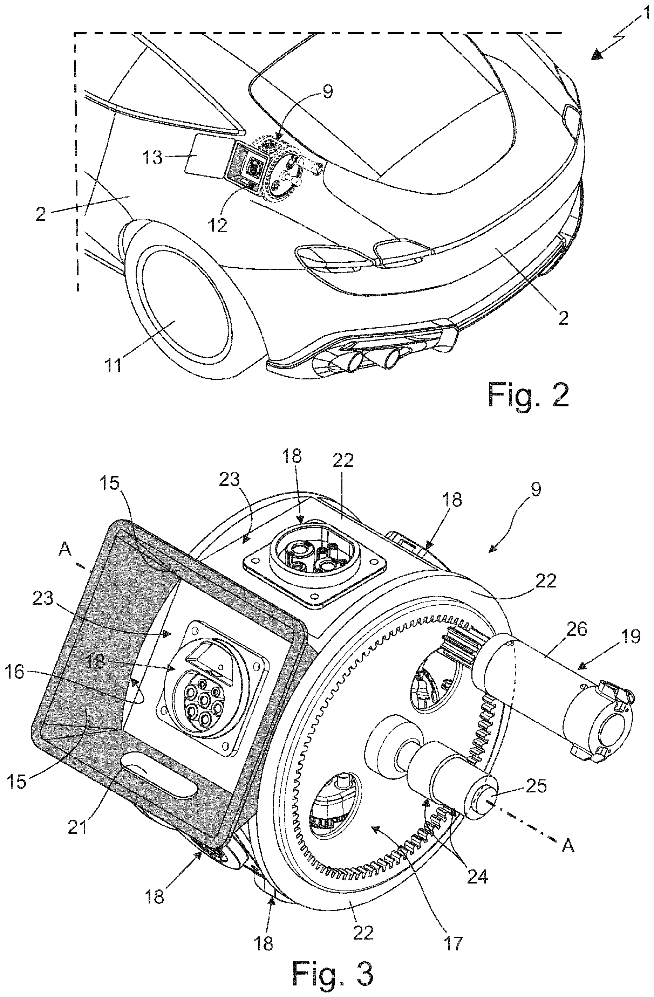

With reference to figures 1 and 2, the road vehicle 1 moreover comprises: a charging unit 8, which is located on the vehicle body 2 and is adapted to charge the electric-energy accumulator 5, when the road vehicle 1 is connected to an outer electric-energy source; and a connection interface 9 that allows the road vehicle 1, or rather the charging unit 8, to be connected to said outer electric-energy source.

The external electric-energy source can be either an AC or DC charging station for road vehicles of known type or the traditional domestic power grid.

More in detail, the charging unit 8 is adapted to interpose itself between the electric-energy accumulator 5 and said outer electric-energy source and is adapted to control the flow of electric energy from the outer electric-energy source to the electric-energy accumulator 5 so as to charge, preferably in the shortest possible amount of time, the electric-energy accumulator 5, advantageously preserving the structural integrity of the electric-energy accumulator 5.

The connection interface 9, on the other hand, is preferably placed on the vehicle body 2 so as to be easily accessible from the outside of the vehicle, and is structured so as to selectively establish a stable electrical connection between the charging unit 8 and said external electric-energy source.

More in detail, the connection interface 9 is preferably in a stable electrical continuity with the charging unit 8, and is structured so as to be couple in a stable, though an easily removable manner, to the (male) electrical connector of a known electrical connection cable that, on the other side, is connected to the external electric-energy source, in order to allow the electric energy to flow from the external electric-energy source to the charging unit 8 and, if necessary, also vice versa.

Preferably, the powertrain 3 and/or the electric-energy accumulator 5 and/or the electric power-supply unit 6 and/or the motor control unit 7 and/or the charging unit 8 is/are furthermore housed inside the vehicle body 2.

The connection interface 9, in turn, is preferably accommodated, or rather recessed, in the vehicle body 2 so as to (selectively) at least partly surface outside of the vehicle.

With reference to Figure 1, in the example shown, in particular, the vehicle body 2 is preferably made of metal and/or composite material, is preferably oblong in shape, and preferably rests on the ground by means of at least one pair of front wheels 10 and at least one pair of rear wheels 11.

Preferably, the front wheels 10 and the rear wheels 11 are moreover arranged in pairs on opposite sides of the vertical midplane of the vehicle, substantially at the vertices of a rectangle or of an isosceles trapezoid. Moreover, the passenger compartment of the vehicle body 2 is preferably located between the front wheels 10 and the rear wheels 11.

In addition, the front wheels 10 are preferably idle and steering wheels, while the rear wheels 11 are preferably drive wheels and optionally also steering wheels.

Therefore, the powertrain 3, or rather the electric motor 4, is preferably adapted to drive into rotation the sole rear wheels 11.

In a different embodiment, however, the front wheels 10 may be drive wheels in addition to or in place of the rear wheels 11.

In other words, the road vehicle 1 is preferably a passenger car, i.e. a motor vehicle for the private transport of people.

In the example shown, moreover, the powertrain 3 is preferably located in the rear part of the vehicle body 2. The electric motor 4, in addition, is preferably an alternating current electric motor of the polyphase (three-phase) type and is preferably connected to the drive wheels of the vehicle, or rather to the rear wheels 11, advantageously by means of a known gear reducer.

Therefore, the electric power-supply unit 6 is preferably adapted to transform/convert the direct-current electric energy coming from the electric-energy accumulator 5 into alternating-current electric energy suitable for the powertrain 3, or rather suitable for the electric motor 4.

Preferably, the electric motor 4 can also function as electric generator.

In other words, the electric motor 6 preferably is a reversible electric machine for auto-traction, i.e. an electric machine that can work both as an electric motor, absorbing electric energy and generating a mechanical torque, and as an electric generator, absorbing mechanical energy and generating electric energy.

The electric power-supply unit 6, in turn, is preferably structured so as to control the flow of electric energy from the electric-energy accumulator 5 to the electric motor 4 and vice versa.

In other words, the electric power-supply unit 6 is preferably a static electric-energy conversion unit of a bidirectional type.

Optionally, the powertrain 3 could also comprise an internal combustion engine, which is adapted to drive into rotation the drive wheels of the vehicle, or rather the rear wheels 11, in combination with, or as an alternative to, the electric motor 4.

With reference to Figure 1, the electric-energy accumulator 5, in turn, is preferably a rechargeable battery pack and is preferably located in the front part of the vehicle body 2.

The battery pack, in addition, preferably has a nominal capacity greater than or equal to 50 kWh and/or a nominal voltage greater than 600 Volts or, more conveniently, equal to about 800 Volts.

In other words, the electric-energy accumulator 5 is preferably a high-voltage battery pack.

The electric power-supply unit 6, on the other hand, is preferably located close to the powertrain 3.

More in detail, the electric power-supply unit 6 is preferably firmly fixed on the rigid outer casing of electric motor 4.

Preferably, the electric power-supply unit 6 moreover includes at least one electronically-controlled power inverter, advantageously of the bidirectional type, which is interposed between the electric-energy accumulator 5 and the powertrain 3, or rather the electric motor 4, and is adapted to transform the direct-current electric energy coming from the electric-energy accumulator 5, or rather from the battery pack, into alternating-current electric energy suitable for the electric motor 4, preferably by varying the frequency and/or voltage thereof as a function of the signals coming from the motor control unit 7.

With reference to figure 1, in turn, the charging unit 8 is preferably located/housed in the front part of the vehicle body 2, close to the battery pack 5, and is adapted to transform/convert the electric energy coming from said external electric-energy source into direct-current electric energy suitable for charging the electric-energy accumulator 5, or rather the battery pack.

More in detail, the charging unit 8 is preferably structured so as to be connectable indifferently to an AC charging station for road vehicles and/or to a DC charging station for road vehicles and/or to the domestic power grid, and is preferably adapted to transform/convert the alternating-current or direct-current electric energy coming from the charging station or from the domestic power grid into a direct-current electric energy adapted to charge the battery pack.

The charging unit 8 is an electronically-controlled apparatus for the static conversion of electric energy that is already widely known and used in the field of electric- or hybrid- propulsion road vehicles, thus it won't be described any further.

With reference to Figures 1 and 2, on the other hand, the connection interface 9 is preferably recessed in the rear part of the vehicle body 2, so as to be easily accessible from the outside.

More in detail, the connection interface 9 is preferably located inside a small service compartment 12, which is made on the vehicle body 2 autogenously so as to directly communicate with the outside of the vehicle through a mouth advantageously substantially rectangular in shape, and preferably also includes a small movable door 13 advantageously with manual and/or servo-assisted opening and/or closing, which is selectively adapted to close the mouth of the same service compartment 12.

In other words, the service compartment 12 is preferably a concealed compartment.

With reference to Figures 2, 3 and 4, the connection interface 9 comprises: an upper covering/concealing frame 15, which is adapted to be fixed to the vehicle body 2 advantageously inside the service compartment 12, and is shaped so as to delimit a large pass-through opening 16 preferably substantially rectangular in shape; and a sockets-holding body 17, which is located beneath the upper frame 15, i.e. inside the vehicle body 2, supports a plurality of known recharge electric sockets 18, and is capable of moving beneath the frame 15 so as to place, on choice, any one of the recharge electric sockets 18 in front of the pass-through opening 16 of the upper frame 15, so that said recharge electric socket 18 is directly accessible from the outside through the pass-through opening 16.

In addition, the connection interface 9 preferably also comprises a preferably electrically-operated, movement device 19 that is adapted to move, on command, the sockets-holding body 17 so as to selectively align any one of the recharge electric sockets 18 with the pass-through opening 16 of the upper frame 15, so that said recharge electric socket 15 is directly reachable from the outside through the same pass-through opening 16.

More in detail, the sockets-holding body 17 is preferably structured so as to arrange one single recharge electric socket 18 at a time in front of the pass-through opening 16 of the upper frame 15.

In addition, the sockets-holding body 17 is preferably located beneath the upper frame 15, locally substantially grazing the pass-through opening 16 of the upper frame 15, and is advantageously also dimensioned to substantially entirely obstruct said pass-through opening 16.

The movement device 19, on the other hand, is preferably structured so as to arrange the sockets-holding body 17 selectively and alternatively into a plurality of distinct operating positions, in each of which a single recharge electric socket 18 is aligned with, or rather arranged at, the pass-through opening 16 of the upper frame 15, so as to be directly reachable from the outside through said pass-through opening 16.

Preferably, the connection interface 9 moreover also comprises a local electronic control unit 20, which is located inside the vehicle body 2 and is adapted to control the movement device 19 based on control signals preferably arriving from at least one button 21, selector or other manually-operated control device, advantageously located on the upper frame 15.

Clearly, the button 21, selector or other manually operated control device could be also located inside the passenger compartment.

For example, the manually-operated control device could be a touch screen located in the dashboard of the vehicle.

With reference to Figures 2, 3 and 4, in the example shown, in particular, the upper frame 15 preferably has a shape substantially complementary to the mouth of the service compartment 12 and is adapted to be rigidly fixed inside the vehicle body 2, or rather inside the service compartment 12.

In addition, the upper frame 15 preferably also has a substantially rectilinear tubular shape, advantageously converging towards the pass-through opening 16, so as to extend cantilevered into the service compartment 12.

Hence, the pass-through opening 16 of upper frame 15 is preferably located inside the service compartment 12, spaced apart from the mouth thereof.

The sockets-holding body 17, on the other hand, is preferably substantially cylindrical in shape and is fixed inside the vehicle body 2 with the capability of rotating about its central axis.

In other words, the sockets-holding body 17 preferably comprises a substantially cylindrical-shaped, drum 22, which is preferably internally hollow, is located immediately underneath the upper frame 15 with the outer periphery directly facing, or more advantageously grazing, the pass-through opening 16, and is capable of freely rotating about its central axis A, so as to move its periphery in front of the pass-through opening 16.

The recharge electric sockets 18, in turn, are preferably distributed on the outer periphery of the rotatable drum 22 so as to selectively and alternatively align with the pass-through opening 16 of the upper frame 15.

More in detail, the recharge electric sockets 18 are preferably substantially evenly spaced on the outer periphery of rotatable drum 22.

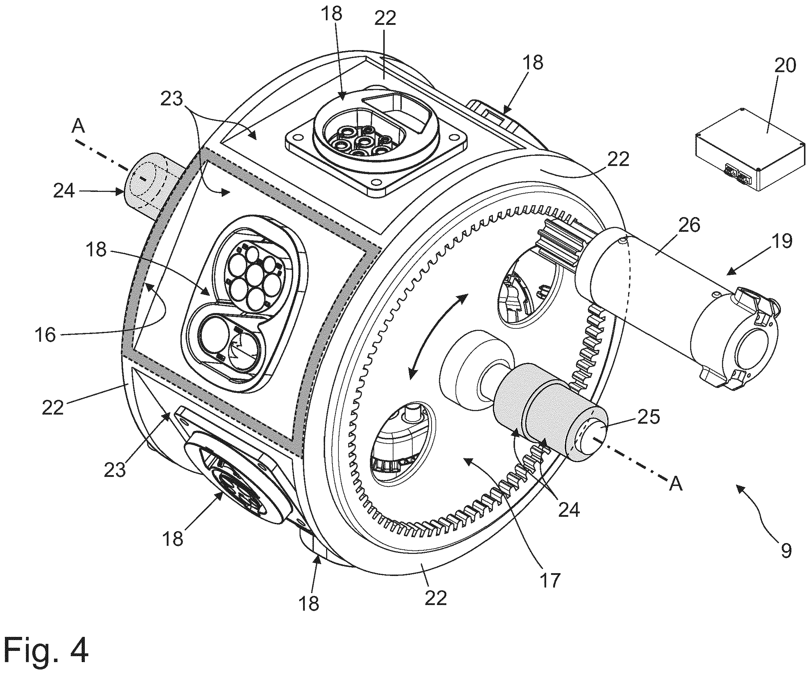

With reference to Figures 3 and 4, in addition, the rotatable drum 22 is preferably provided with a plurality of housing seats 23, which are distributed, preferably in an even manner, on its outer periphery and are dimensioned so as to accommodate each a respective recharge electric socket 18 of know type.

Moreover, each housing seat 23 preferably has a shape substantially complementary to that of the pass-through opening 16 of upper frame 15, so as to form an extension thereof when it is aligned to the pass-through opening 16, whereas the recharge electric sockets 18 are preferably located each substantially at the centre of the respective housing seat 23.

The recharge electric sockets 18 are standard components already widely known and used in the field of electric- or hybrid- propulsion road vehicles, thus they won't be described any further.

Clearly, the recharge electric sockets 18 present on the sockets-holding body 17, or rather on the periphery of the rotatable drum 22, are advantageously structured so as to couple each to a respective model of electrical power connector, which is uniquely associated with a specific type of AC or DC charging station for vehicles or with the traditional domestic power grid (single-phase and/or three-phase) .

Preferably, at least a part of the recharge electric sockets 18 present on the periphery of the rotatable drum 22 are moreover in electrical continuity with the charging unit 8 via one or more slip ring electrical connections 24, which are preferably located on the support pin or pins 25 that extend coaxial to central axis A and allow the rotatable drum 22 to freely rotate around the same axis.

In the example shown, in particular, the support pins 25 jut out from opposite sides of the rotatable drum 22 while remaining locally coaxial to the central axis A, and are preferably also integral to the rotatable drum 22.

More in detail, at least one of the recharge electric sockets 18 present on the periphery of rotatable drum 22 is a DC recharge electric socket (for example a CHAdeMO electric socket) specific for a DC charging station (i.e. in direct current), and the support pins 25 are structured so as to incorporate a segment of the electrical conductors for high currents, which connect the two poles of the DC recharge electric socket to the charging unit 8.

More in detail, the support pins 25 are preferably substantially entirely made of electrically conductive material, so as to allow the flow of particularly high electric currents, and the slip-ring electrical connections 24 directly slide on the outer surface of the support pins 25.

In other words, the section of the electrical conductor for high currents advantageously coincides with the section of a respective support pin 25.

Clearly, the electrical connection between the or some recharge electric sockets 18 and the charging unit 8 can also take place via normal suitably-insulated electrical cables, which came out from one or more access openings present on at least one of the heads of the sockets-holding body 17, or rather of the rotatable drum 22.

With reference to Figures 2 and 3, on the other hand, the movement device 19 is adapted to rotate, on command, the rotatable drum 22 about axis A. Preferably, the width of the rotation about the axis A is moreover smaller than or equal to 360°.

More in detail, the movement device 19 is adapted to rotate, on command, the rotatable drum 22 about axis A, so as to arrange the rotatable drum 22 in a plurality of predetermined angular positions, in each of which it aligns a specific recharge electric socket 18 present on the periphery of the drum, or rather a specific housing seat 23 present on the periphery of the drum, to the pass-through opening 16 of the upper frame 15.

In the example shown, in particular, the movement device 19 preferably comprises: a small electric rotary actuator 26, which is mechanically coupled to the rotatable drum 22 so as to drive the latter into rotation around the axis A; and optionally also an angular position transducer, which is capable of determining the angular position of the rotatable drum 22 relative to a fixed angular reference.

The local electronic control unit 20, in turn, is preferably adapted to command the electric actuator 26 based on the signals coming from the angular position transducer and/or from the button 21 or other manually-operated control member or selector.

Operation of road vehicle 1 is easily inferable from the description above and does not require further explanations.

As regards operation of the vehicle connection interface 9, when it is necessary to connect the road vehicle 1 to a charging station for road vehicles, the person selects the recharge electric socket 18 suitable for the chosen charging station by acting on the button 21 or other manually-operated control member or selector.

The movement device 19, in turn, moves the sockets-holding body 17, or rather rotates the rotatable drum 22, so as to place the chosen recharge electric socket 18 at the pass-through opening 16 of the upper frame 15.

Optionally, the local electronic control unit 20 can be programmed/configured so as to automatically determine or recognize the correct recharge electric socket 18 to be arranged at the pass-through opening 16 of the upper frame 15, and then command the movement device 19 in an autonomous manner so as to arrange said recharge electric socket 18 at the pass-through opening 16 of the upper frame 15.

More in detail, the local electronic control unit 20 may be able to electronically communicate (for example by means of radio signals) with the charging station in order to determine the recharge electric socket 18 required by the charging station itself.

The advantages connected to the special structure of connection interface 9 are remarkable.

First of all, the connection interface 9 minimizes the space taken up by the recharge electric sockets on the outer surface of the vehicle body 2.

In addition, the connection interface 9 also simplifies the electrical circuit that connects the different recharge electric sockets 18 to the charging unit 8.

In fact, in electric- or hybrid- propulsion cars provided with two or more recharge electric sockets simultaneously accessible from the outside, each recharge electric socket, for safety reasons, must be internally equipped with electrically-controlled disconnecting switches capable of isolating the poles of the electric socket when it is not used.

In connection interface 9, instead, the unused recharge electric sockets 18 are unreachable, because they are enclosed inside the vehicle body 2. As a consequence, the presence of the disconnecting switches inside the recharge electric sockets 18 is no longer necessary, because the risk that a person may touch a live electrical conductor is zero.

Last but not least, the arrangement of the button 21 or other manually-operated control device on the frame 15, beneath the movable door 13, avoids an unwanted activation of the button 21 by third parties and, at the same time, protects the button 21 from dirt and/or tampering. The opening of movable door 13, in fact, is advantageously controlled by an electromechanical locking device that can be commanded from inside the vehicle and/or is subject to operate a lock located on the door.

Finally, it is clear that modifications and variations may be made to the road vehicle 1 and to the connection interface 9 without however departing from the scope of the present invention.

For example, the upper frame 15 may be replaced by a panel provided with a large through opening that forms the pass-through opening 16.

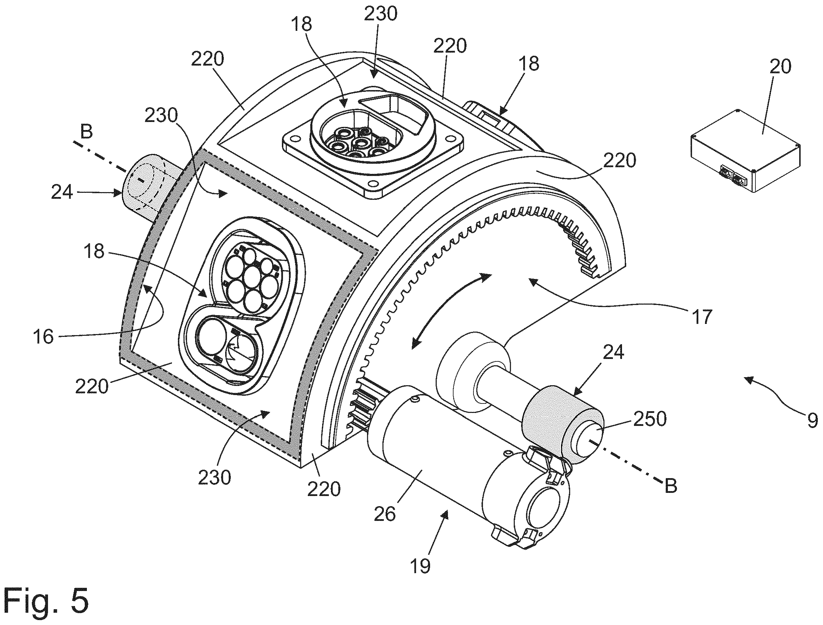

In addition, with reference to Figure 5, in a different embodiment, the sockets-holding body 17 is preferably substantially semi-cylindrical in shape and is fixed inside the vehicle body 2 with the capability of rotating about the central axis of the cylinder.

In other words, the sockets-holding body 17 preferably comprises a drum 220 substantially semi-cylindrical in shape, which is located immediately beneath the upper frame 15, with the outer cylindrical surface grazing the pass-through opening 16 of the upper frame 15, and is capable of rotating, or rather tilting, about a rotation axis B coinciding with the axis of symmetry of the cylinder.

Also in this embodiment variation, the recharge electric sockets 18 are distributed, preferably in a substantially even manner, on the outer cylindrical surface of the tiltable drum 220, advantageously inside special housing seats 230, so as to align themselves from time to time with the pass-through opening 16 of the upper frame 15.

Also in this embodiment variation, furthermore, the movement device 19 is adapted to rotate, on command, the tiltable drum 220 about rotation axis B. Clearly, the width of the rotation is preferably smaller than or equal to 180°.

In this this embodiment variation, moreover, the slip-ring electrical connection or connections 24 may be advantageously reserved for the sole recharge electric socket or sockets 18 specific for DC charging stations, namely using direct current.

In other words, the tiltable drum 220 is preferably also provided with a pair of support pins 250, which extend cantilevered from opposite sides the drum while remaining coaxial to axis B, and accommodate the slip-ring electrical connection or connections 24.

Clearly, the sockets-holding body 17 could also have substantially the shape of a cylindrical sector or of a regular prism, i.e. a right prism having a regular polygon as a base.

## Claims

1. A road vehicle (1) comprising: a vehicle body (2) provided with ground resting wheels (10, 11); an electrical or hybrid powertrain (3), which is adapted to drive into rotation at least one of said ground resting wheels (10, 11); an electric-energy accumulator (5), which is capable of storing inside itself a given amount of electric energy to be supplied to said powertrain (3); a charging unit (8) which is adapted to recharge said electric-energy accumulator (5) when the road vehicle (1) is connected to an outer electric-energy source; and an electric connection interface (9) that allows to connect the charging unit (8) to said outer electric-energy source;
the road vehicle (100) being **characterised in that** said electric connection interface (9) comprises: an upper frame or panel (15), which is arranged on or in the vehicle body (2) and delimits a pass-through opening (16); and a sockets -holding body (17), which is arranged beneath said upper frame or panel (15), supports a plurality of recharge electric sockets (18), and is capable of moving beneath said upper frame or panel (15) so as to arrange any one of said recharge electric sockets (18) in front of the pass-through opening (16) of said upper frame or panel (15), so that said recharge electric socket (18) is accessible from the outside via said pass-through opening (16).

2. Road vehicle according to claim 1, wherein said electric connection interface (9) moreover comprises a movement device (19), which is adapted to move, on command, said sockets-holding body (17) so as to selectively align any one of said recharge electric sockets (18) to the pass-through opening (16) of the upper frame or panel (15), so that the same recharge electric socket (18) is reachable from the outside via said pass-through opening (16).

3. Road vehicle according to claim 1 or 2, wherein the sockets-holding body (17) is located beneath said upper frame or panel (15) locally substantially grazing said pass-through opening (16), and is advantageously also dimensioned so as to substantially entirely obstruct said pass-through opening (16).

4. Road vehicle according to any one of the preceding claims, wherein said sockets-holding body (17) comprises a movable drum (22, 220), which is located beneath said upper frame or panel (15) with its periphery facing said pass-through opening (16), and is capable of rotating about a given reference axis (A, B), so as to move its periphery in front of the pass-through opening (16) of the upper frame or panel (15); said recharge electric sockets (18) being distributed on the periphery of the movable drum (22, 220) so as to be selectively and alternatively alignable to said pass-through opening (16).

5. Road vehicle according to claim 4, wherein the recharge electric sockets (18) are substantially evenly spaced on the periphery of the movable drum (22, 220).

6. Road vehicle according to claim 4 or 5, wherein the movable drum (22) is provided with a plurality of housing seats (23) which are distributed on its periphery and are dimensioned to accommodate each a respective recharge electric socket (18).

7. Road vehicle according to claim 6, wherein each housing seat (23) has a shape substantially complementary to the pass-through opening (16) of the upper frame or panel (15), so as to form an extension thereof.

8. Road vehicle according to any one of claims 4 to 7, wherein the movable drum (22) is substantially cylindrical in shape.

9. Road vehicle according to any one of the preceding claims, wherein said electric connection interface (9) also comprises a local electronic control unit (20), which is adapted to command the movement device (19) on the basis of control signals coming from at least one manually-operated command device (21).

10. Road vehicle according to claim 9, wherein said manually-operated command device (21) is a manually-operated button or selector switch, and/or is placed on said upper frame or panel (15).

11. Road vehicle according to any one of the preceding claims, wherein said electric connection interface (9) is recessed within a service compartment (12) realized in the vehicle body (2).
